# EUROPEAN PATENT APPLICATION

(11) **EP 4 382 485 A1**
(43) Date of publication of application: **12.06.2024**
(21) Application number: 22852713.1
(22) Date of filing: 24.06.2022
(51) Int. Cl.: C01G 41/00, C01G 41/02

(54) **TUNGSTIC ACID SOLUTION AND METHOD FOR PRODUCING SAME, AND TUNGSTEN OXIDE POWDER AND METHOD FOR PRODUCING SAME**

(30) Priority: 04.08.2021 JP 2021128392
(71) Applicant: Mitsui Mining & Smelting Co., Ltd, Shinagawa-ku Tokyo 141-8584 (JP)
(72) Inventor: MOTONO, Ryuji, Omuta-shi, Fukuoka 836-0003 (JP); HARA, Shuhei, Omuta-shi, Fukuoka 836-0003 (JP); KUMA, Taihei, Omuta-shi, Fukuoka 836-0003 (JP)
(74) Representative: Novagraaf Technologies
(86) International application number: PCT/JP2022/025274
(87) International publication number: WO 2023/013287

(57) **Abstract**

A tungstic acid solution of the present invention is a tungstic acid solution containing 0.1 to 40.0 mass% of tungsten in terms of WOs, and has a particle size (D50) of 20 nm or less as measured by particle size distribution measurement using a dynamic light scattering method. A production method of a tungstic acid solution of the present invention includes a step of adding an acidic tungsten aqueous solution containing 1 to 100 g/L of tungsten in terms of WOs to a 10 to 30 mass% ammonia aqueous solution to generate a tungsten-containing precipitate, and a step of adding an organic nitrogen compound to a tungsten-containing precipitation slurry in which the tungsten-containing precipitate is formed into a slurry state to generate a tungstic acid solution.

## Description

### Technical Field

The present invention relates to a tungstic acid solution and a method for producing the same, a tungsten oxide powder and a method for producing the same.

### Background Art

Tungsten is a metal having the highest melting point among metals, relatively high electric resistance as a metal, and high hardness, and is widely used in industrial and medical fields. For example, it has been studied that if tungsten trioxide can be converted into a solution, coating becomes easy, and it becomes easy to form a composite with a plurality of elements and to add characteristics suitable for applications. For example, Patent Literature 1 discloses tungsten oxide dissolved in ammonia water heated to 70°C.

### Citation List

### Patent Literature

Patent Literature 1: JP 2015-44739 A

### Summary of Invention

### Technical Problem

However, in the tungsten oxide disclosed in Patent Literature 1, since equipment for heating ammonia water having a high concentration of 25% to 70°C is required, it is difficult to reduce production costs.

In view of the above problems, an object of the present invention is to provide a tungstic acid solution which can be dissolved at room temperature and has excellent solution stability and a method for producing the same, and a tungsten oxide powder and a method for producing the same.

### Solution to Problem

The tungstic acid solution of the present invention made to solve the above problems is a tungstic acid solution containing 0.1 to 40 mass% of tungsten in terms of WOs, and has a particle size (D50) of 20 nm or less as measured by particle size distribution measurement using a dynamic light scattering method.

The tungstic acid solution of the present invention preferably contains 0.1 to 40 mass% of tungsten in terms of WOs from a viewpoint of improving the solution stability of the solution. In the tungstic acid solution of the present invention more preferably contains 20 to 30 mass% of tungsten in terms of WO₃.

Here, a tungstic acid concentration in the tungstic acid solution is calculated by appropriately diluting the solution with dilute hydrochloric acid as necessary, and measuring the W weight fraction in terms of tungsten oxide (WOs) by ICP emission spectrometry (AG-5110 manufactured by Agilent Technologies). Tungstic acid in the tungstic acid solution of the present invention does not necessarily exist in the state of WO₃. The content of tungstic acid is indicated in terms of WOs based on a practice of indicating the tungstic acid concentration.

Here, it is presumed that the tungstic acid in the tungstic acid solution of the present invention is present in the solution as polytungstic acid polynuclear complex ions in which tungsten atoms and oxygen atoms are condensed in multiple stages in the solution.

The particle size (D50) measured by particle size distribution measurement using the dynamic light scattering method is preferably 20 nm or less from a viewpoint of temporal stability, more preferably 10 nm or less, still more preferably 2 nm or less, particularly preferably 1 nm or less, and particularly more preferably less than a detection limit of less than 1 nm. As described above, regarding the particle size (D50) of the present invention, a solution having a particle size (D50) of 20 nm or less as measured by particle size distribution measurement using the dynamic light scattering method is referred to as a "tungstic acid solution" of the present invention. For example, the particle size (D50) of tungstic acid particles or the like in the tungstic acid solution of the present invention as measured by the particle size distribution measurement using the dynamic light scattering method is preferably 20 nm or less from the viewpoint of temporal stability, more preferably 10 nm or less, still more preferably 2 nm or less, particularly preferably 1 nm or less, and still more preferably less than the detection limit of less than 1 nm.

Here, the dynamic light scattering method is a method in which light scattering intensity from a group of particles moving in a Brownian motion is measured by irradiating a solution such as a suspension solution with light such as laser light, and a particle diameter and a distribution are obtained from temporal variation of the intensity. Specifically, the method for evaluating the particle size distribution is performed in accordance with JIS Z 8828:2019 "Particle size analysis-dynamic light scattering method" using a zeta potential/particle size/molecular weight measurement system (ELSZ-2000ZS manufactured by Otsuka Electronics Co., Ltd.). In order to remove dust or the like in the solution to be measured immediately before measurement, the solution is filtered with a filter having a pore size of 2 µm, and subjected to ultrasonic treatment for 3 minutes with an ultrasonic cleaner (VS-100III manufactured by AS ONE Corporation). Further, a liquid temperature of the solution as a measurement mode was adjusted to 25°C. The particle size (D50) refers to a median diameter (D50) that is a particle size indicating a 50% integrated value of an integrated distribution curve.

The "solution" in the present invention is not limited to a solution in which a solute is dispersed or mixed in a state of a single molecule in a solvent, and also includes an assembly in which a plurality of molecules is attracted by intermolecular interaction, for example, (1) a multimer molecule, (2) a solvated molecule, (3) a molecular cluster, and (4) colloidal particles are dispersed in a solvent.

In the tungstic acid solution of the present invention, the tungstic acid solution is preferably an aqueous solution.

The tungstic acid in the tungstic acid solution of the present invention has high dispersibility in water and good solubility in water, and therefore, pure water can be used as a solvent.

The tungstic acid solution of the present invention contains ammonia and an organic nitrogen compound.

The tungstic acid solution of the present invention contains ammonia and an organic nitrogen compound in addition to the tungstic acid. The "ammonia" and the "organic nitrogen compound" according to the present invention include those ionized in the tungstic acid solution of the present invention. As will be described in detail in the production method of the tungstic acid solution of the present invention to be described later, in the production step, a hydrous ammonium tungstate cake, which is a tungsten-containing precipitation slurry, is generated by a reverse neutralization method in which an acidic tungsten solution is added to ammonia water, and then an organic nitrogen compound is added and mixed to generate the tungstic acid solution of the present invention, and thus it is considered that substituted ammonia and the organic nitrogen compound are present in the solution as cations.

Examples of the method for measuring the concentration of ammonia present in the solution include a method in which sodium hydroxide is added to the solution, ammonia is distilled and separated, and the concentration of ammonia is quantified by an ion meter, a method in which N₂ content in a gasified sample are quantified by a thermal conductivity meter, a Kjeldahl method, gas chromatography (GC), ion chromatography, gas chromatography/mass spectrometry (GC-MS), and the like.

On the other hand, examples of the organic nitrogen compound include an aliphatic amine, an aromatic amine, an amino alcohol, an amino acid, a polyamine, a quaternary ammonium, a guanidine compound, and an azole compound.

Examples of the aliphatic amine include methylamine, dimethylamine, trimethylamine, ethylamine, methylethylamine, diethylamine, triethylamine, methyldiethylamine, dimethylethylamine, n-propylamine, di-n-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine and tert-butylamine, n-pentamine, n-hexylamine, cyclohexylamine, and piperidine.

Examples of the aromatic amine include aniline, phenylenediamine, and diaminotoluene. Furthermore, examples of the amino alcohol include methanolamine, ethanolamine, propanolamine, butanolamine, pentanolamine, dimethanolamine, diethanolamine, trimethanolamine, methylmethanolamine, methylethanolamine, methylpropanolamine, methylbutanolamine, ethylmethanolamine, ethylethanolamine, ethylpropanolamine, dimethylmethanolamine, dimethylethanolamine, dimethylpropanolamine, methyldimethanolamine, methyldiethanolamine, diethylmethanolamine, trishydroxymethylaminomethane, bis(2-hydroxyethyl)aminotris(hydroxymethyl)methane, aminophenol, and the like. Examples of the amino acid include alanine, arginine, aspartic acid, and EDTA. Further, examples of the polyamine include polyamine and polyether amine.

Examples of the quaternary ammonium include alkylimidazolium, pyridinium, pyrrolidium, and tetraalkylammonium. Here, specific examples of the alkylimidazolium include 1-methyl-3-methylimidazolium, 1-ethyl-3-methylimidazolium, 1-propyl-3-methylimidazolium, 1-butyl-3-methylimidazolium, 1-hexyl-3-methylimidazolium, 1-methyl-2,3-dimethylimidazolium, 1-ethyl-2,3-dimethylimidazolium, 1-propyl-2,3-dimethylimidazolium, and 1-butyl-2,3-dimethylimidazolium. Specific examples of pyridinium and pyrrolidium include N-butyl-pyridinium, N-ethyl-3-methyl-pyridinium, N-butyl-3-methyl-pyridinium, N-hexyl-4- (dimethylamino)-pyridinium, N-methyl-1-methylpyrrolidinium, and N-butyl-1-methylpyrrolidinium. Further, specific examples of tetraalkylammonium include tetramethylammonium, tetraethylammonium, tetrabutylammonium, and ethyl-dimethyl-propylammonium. Examples of the anion that forms a salt with the above cation include OH⁻, Cl⁻, Br-, I⁻, BF₄⁻, and HSO₄⁻.

Examples of the guanidine compound include guanidine, diphenylguanidine, and ditolylguanidine. Examples of the azole compound include imidazole compounds and triazole compounds. Here, specific examples of the imidazole compound include imidazole, 2-methylimidazole, and 2-ethyl-4-methylimidazole. Specific examples of the triazole compound include 1,2,4-triazole, methyl 1,2,4-triazole-3-carboxylate, and 1,2,3-benzotriazole.

Examples of the method for measuring the concentration of the organic nitrogen compound present in the solution include gas chromatography (GC), liquid chromatography (LC), mass spectrometry (MS), gas chromatography and mass spectrometry (GC-MS), liquid chromatography and mass spectrometry (LC-MS), and the like, and a method of quantifying the N₂ content in the gasified sample with a thermal conductivity meter may be used in combination.

In the tungstic acid solution of the present invention, the organic nitrogen compound is preferably an aliphatic amine or quaternary ammonium.

This is because when the organic nitrogen compound is an aliphatic amine or a quaternary ammonium, these organic nitrogen compounds have high volatility and are easily removed when combined with a plurality of elements in order to add characteristics suitable for the application.

Here, when the organic nitrogen compound is an aliphatic amine, the organic nitrogen compound is particularly low in toxicity, which is preferable. Specifically, an aliphatic amine having 1 to 4 carbon atoms is more preferable, and an aliphatic amine having 1 to 2 carbon atoms is particularly preferable. Examples thereof include methylamine and dimethylamine.

When the organic nitrogen compound is quaternary ammonium, it is preferable from a viewpoint of having not only high solubility but also high crystallization suppression and high solation suppression. For example, a tetraalkylammonium salt is preferable, a tetraalkylammonium hydroxide salt is more preferable, tetramethylammonium hydroxide and tetraethylammonium are still more preferable, and tetramethylammonium hydroxide (TMAH) is also particularly preferable.

Furthermore, the organic nitrogen compound is not one selected from an aliphatic amine, an aromatic amine, an amino alcohol, an amino acid, a polyamine, a quaternary ammonium, a guanidine compound, and an azole compound, but may be a mixture of two or more thereof. For example, a mixture of two compounds, aliphatic amines and quaternary ammonium, is preferable from a viewpoint that the solubility can be increased while suppressing an addition amount so as not to increase the toxicity.

Specific examples thereof include a mixture of two organic nitrogen compounds such as methylamine and tetramethylammonium hydroxide (TMAH), dimethylamine and tetramethylammonium hydroxide (TMAH), methylamine and dimethylamine, and a mixture of three organic nitrogen compounds such as methylamine, dimethylamine and tetramethylammonium hydroxide (TMAH).

In the tungstic acid solution of the present invention, the aliphatic amine is more preferably methylamine or dimethylamine, and the quaternary ammonium is more preferably tetramethylammonium hydroxide (TMAH).

When the aliphatic amine is methylamine or dimethylamine, the toxicity is low as described above, which is preferable. When the quaternary ammonium is tetramethylammonium hydroxide (TMAH), not only high solubility is obtained as described above, but also high crystallization suppression and high solation suppression are obtained, which is preferable. Furthermore, tetramethylammonium hydroxide (TMAH) is particularly preferable from a viewpoint of having high crystallization suppression and high solation suppression.

The tungstic acid solution of the present invention preferably has a pH of 6 or more and 13 or less.

This is because when the tungstic acid solution of the present invention has a pH of 6 or more and 13 or less, the solution is more excellent in solution stability. The pH is more preferably 6 or more and 9 or less, and still more preferably 6 or more and 8 or less. In the tungstic acid solution of the present invention, as basicity of the organic nitrogen compound contained in the solution increases, the organic nitrogen compound tends to strongly bind to the polytungstic acid polynuclear complex ions, and H⁺ in the polytungstic acid polynuclear complex ions is liberated, so that it is presumed that the pH tends to decrease.

The tungstic acid solution of the present invention may contain oxide powder of Nb, Ta, Ti, Mo, Si, Zr, Zn, Al, Y, V, lanthanoid (La, Ce, Nd, Eu, Gd, Dy, Yb), or the like as an additive. This is because since the tungstic acid solution of the present invention is a uniform solution, improvement in uniformity and improvement in reactivity (reaction rate) are expected even when these oxide powders are in a suspended state. When these oxide powders are dissolved in the tungstic acid solution of the present invention to form a uniform solution, complexing elements can have the most favorable reactivity.

Furthermore, the tungstic acid solution of the present invention may contain components other than components derived from tungsten or tungstic acid and components derived from ammonia and an organic nitrogen compound (referred to as "other components") as long as the action and effect thereof are not inhibited. Examples of other components include Nb, Ta, Ti, Mo, Si, Zr, Zn, Al, Y, V, and lanthanoid (La, Ce, Nd, Eu, Gd, Dy, Yb). However, the present invention is not limited thereto. The content of other components in the tungstic acid solution of the present invention is preferably less than 5 mass%, more preferably less than 4 mass%, and still more preferably less than 3 mass%. Incidentally, the tungstic acid solution of the present invention is assumed to unintentionally contain inevitable impurities. The content of the inevitable impurities is preferably less than 0.01 mass%.

The tungsten oxide powder of the present invention contains tungstic acid particles contained in a tungstic acid solution.

The tungsten oxide powder of the present invention contains tungstic acid particles contained in the tungstic acid solution described above. The method for producing the tungsten oxide powder of the present invention will be described later.

The production method of the tungstic acid solution of the present invention described above will be described below.

A production method of a tungstic acid solution of the present invention including: a step of adding an acidic tungsten aqueous solution containing tungsten in an amount of 1 to 100 g/L in terms of WOs to a 10 to 30 mass% ammonia aqueous solution to generate a tungsten-containing precipitate; and a step of adding an organic nitrogen compound to a tungsten-containing precipitation slurry obtained by making the tungsten-containing precipitate into a slurry to generate a tungstic acid solution.

First, in the step of adding an acidic tungsten aqueous solution containing 1 to 100 g/L of tungsten in terms of WOs to a 10 to 30 mass% ammonia aqueous solution to generate a tungsten-containing precipitate, the acidic tungsten aqueous solution refers to a tungsten sulfate aqueous solution obtained by solvent extraction of a solution in which tungsten is dissolved in an acidic aqueous solution containing sulfuric acid. The tungsten referred to in the present description includes tungsten oxide unless otherwise specified.

Here, the tungsten sulfate aqueous solution is preferably adjusted to contain 1 to 100 g/L of tungsten in terms of WOs by adding water (for example, pure water). At this time, when a tungsten concentration is 1 g/L or more in terms of WOs, it is preferable because the tungstic acid compound hydrate easily soluble in water is generated, and in consideration of productivity, the tungsten concentration is more preferably 10 g/L or more, and still more preferably 20 g/L or more. On the other hand, when the tungsten concentration is 100 g/L or less in terms of WOs, it is preferable because the tungstic acid compound hydrate easily soluble in water is generated, and in order to synthesize the tungstic acid compound hydrate more reliably soluble in water, the tungsten concentration is more preferably 90 g/L or less, still more preferably 80 g/L or less, and particularly preferably 70 g/L or less. The pH of the tungsten sulfate aqueous solution is preferably 2 or less, and more preferably 1 or less from a viewpoint of completely dissolving tungsten or tungsten oxide.

When the tungsten sulfate aqueous solution is added to the aqueous ammonia solution, it is preferable to add the tungsten sulfate aqueous solution to 10 mass% to 30 mass% of the aqueous ammonia solution by a so-called reverse neutralization method, that is, to obtain a tungstic acid compound hydrate slurry, a so-called tungsten-containing precipitate slurry by the reverse neutralization method.

The ammonia aqueous solution used for the reverse neutralization preferably has an ammonia concentration of 10 mass% to 30 mass%. When the ammonia concentration is 10 mass%, tungsten hardly remains undissolved, and tungsten or tungsten oxide can be completely dissolved in water. On the other hand, it is preferable that the ammonia concentration is 30 mass% or less because it is in the vicinity of a saturated aqueous solution of ammonia.

From such a viewpoint, the ammonia concentration of the aqueous ammonia solution is preferably 10 mass% or more, more preferably 15 mass% or more, still more preferably 20 mass% or more, and particularly preferably 25 mass%. On the other hand, the ammonia concentration is preferably 30 mass% or less, more preferably 29 mass% or less, and still more preferably 28 mass% or less.

During the reverse neutralization, a molar ratio of NH₃/WO₃ is preferably 0.1 or more and 300 or less, and more preferably 5 or more and 200 or less as the amount of the tungsten sulfate aqueous solution added to the ammonia water. In addition, for the tungsten sulfate aqueous solution added to the ammonia water, the molar ratio of NH₃/SO₄²⁻ is preferably 3.0 or more, more preferably 10.0 or more, and still more preferably 20.0 or more from a viewpoint of generating an amine and a tungstic acid compound soluble in a thin ammonia water. On the other hand, from a viewpoint of cost reduction, the molar ratio of NH₃/SO₄²⁻ is preferably 200 or less, more preferably 150 or less, and still more preferably 100 or less.

In the reverse neutralization, the time required for adding the tungsten sulfate aqueous solution to the ammonia water is preferably 1 minute or less, more preferably 30 seconds or less, and still more preferably 10 seconds or less. In other words, it is preferable that the tungsten sulfate aqueous solution is not gradually added over time, but the tungsten sulfate aqueous solution is charged into ammonia water in as short a time as possible, for example, charged at once, and subjected to a neutralization reaction. In the reverse neutralization, since an acidic tungsten sulfate aqueous solution is added to alkaline ammonia water, the neutralization reaction can be performed while maintaining a high pH. The tungsten sulfate aqueous solution and the ammonia water can be used at room temperature.

Then, a sulfur component is removed from the slurry of the tungsten-containing precipitate obtained by the reverse neutralization method, and the tungsten-containing precipitate from which the sulfur component is removed is generated. In the slurry of the tungsten-containing precipitate obtained by the reverse neutralization method, sulfate ions remaining without reacting with tungsten or tungsten oxide and sulfur components of hydrogen sulfate ions are present as impurities, and thus it is preferable to remove these.

A method for removing the sulfur component is arbitrary, and for example, a method by filtration using a membrane such as reverse osmosis filtration using ammonia water or pure water, ultrafiltration, or microfiltration, centrifugation, or other known methods can be adopted. When the sulfur component is removed from the slurry of the tungsten-containing precipitate, temperature adjustment is not particularly necessary, and the removal may be performed at room temperature.

Specifically, the slurry of the tungsten-containing precipitate obtained by the reverse neutralization method is decanted using a centrifuge, and washing is repeated until conductivity of the slurry of the tungsten-containing precipitate becomes 500 µS/cm or less, thereby obtaining the tungsten-containing precipitate from which the sulfur component has been removed. A liquid temperature of the slurry of the tungsten-containing precipitate was adjusted to 25°C, a measurement section of the conductivity meter (ASCON2 manufactured by AS ONE Corporation) was immersed in the supernatant of the slurry of the precipitate, and a value of the conductivity was read after the value was stabilized.

A cleaning liquid used for removing the sulfur component is preferably ammonia water. Specifically, 5.0 mass% or less of ammonia water is preferable, 4.0 mass% or less of ammonia water is more preferable, 3.0 mass% or less of ammonia water is still more preferable, and 2.5 mass% of ammonia water is particularly preferable. When the ammonia water is 5.0 mass% or less, ammonia and ammonium ions are appropriate for the sulfur component, and an unnecessary increase in cost can be avoided.

Next, in the step of adding an organic nitrogen compound to the tungsten-containing precipitation slurry obtained by slurrying the tungsten-containing precipitate to generate a tungstic acid solution, the tungsten-containing precipitation slurry is obtained by diluting the tungsten-containing precipitate from which the sulfur component has been removed as described above with pure water or the like to form a slurry. Regarding the tungsten concentration of the tungsten-containing precipitation slurry from which the sulfur component has been removed, a part of the slurry is collected, dried at 110°C for 24 hours, and then fired at 1,000°C for 4 hours to generate WOs. The weight of WOs thus generated is measured, and the tungsten concentration of the slurry can be calculated from the weight.

Then, by mixing an organic nitrogen compound with the tungsten-containing precipitation slurry from which the sulfur component has been removed, the tungstic acid solution of the present invention is obtained.

Specifically, the tungsten-containing precipitation slurry thus obtained is added to an organic nitrogen compound and the mixture is mixed with pure water so that the tungsten concentration of the final mixture is 0.1 to 40 mass% in terms of WOs, and the liquid temperature is maintained at room temperature (25°C) for 1 hour while the mixture is stirred, whereby a colorless and transparent tungstic acid solution of the present invention is obtained.

The organic nitrogen compound to be mixed with the tungsten-containing precipitation slurry is preferably an aliphatic amine and/or a quaternary ammonium.

Here, from a viewpoint of solubility, the aliphatic amine is preferably mixed so that the concentration of the aliphatic amine in the tungsten-containing precipitation slurry is 40 mass% or less. From the same viewpoint, the mixing is preferably performed so that the concentration of the aliphatic amine in the tungsten-containing precipitation slurry is 0.1 mass% or more, and more preferably 20 mass% or more. The aliphatic amine is more preferably methylamine or dimethylamine.

On the other hand, from the viewpoint of solubility, the quaternary ammonium is preferably mixed so that the quaternary ammonium concentration in the tungsten-containing precipitation slurry is 40 mass% or less. From the same viewpoint, the mixing is preferably performed so that the quaternary ammonium concentration in the tungsten-containing precipitation slurry is 0.1 mass% or more, and more preferably 20 mass% or more. The quaternary ammonium is more preferably tetramethylammonium hydroxide (TMAH).

Furthermore, the organic nitrogen compound to be mixed with the tungsten-containing precipitation slurry may be a mixture of two or more kinds instead of one kind of aliphatic amine or quaternary ammonium. Examples of the organic nitrogen compound include a mixture of two or more organic nitrogen compounds such as methylamine and tetramethylammonium hydroxide (TMAH), dimethylamine and tetramethylammonium hydroxide (TMAH), methylamine and dimethylamine, and a mixture of three or more organic nitrogen compounds such as methylamine, dimethylamine and tetramethylammonium hydroxide (TMAH), and the organic nitrogen compound may be appropriately changed according to the use.

A production method of a tungsten oxide powder from the above-described tungstic acid solution of the present invention will be described below.

The production method of a tungsten oxide powder of the present invention includes a step of drying and firing a tungstic acid solution obtained by the production method of a tungstic acid solution of the present invention described above to generate a tungsten oxide powder.

First, the tungstic acid solution obtained by the above-described production method of a tungstic acid solution of the present invention is placed in a stationary furnace, and dried in the atmosphere at a heating temperature of about 110°C for 7 hours to remove moisture in the tungstic acid solution of the present invention, thereby obtaining an intermediate product of the tungsten oxide powder containing tungsten oxide particles contained in the tungstic acid solution of the present invention. The tungstic acid solution may be placed in a vacuum drying furnace having an internal pressure set to 0.01 MPa, heated to 60°C or higher, and vacuum-dried for 6 hours.

Next, the obtained intermediate product (also referred to as dry powder) of the tungsten oxide powder containing tungsten oxide particles is placed in a stationary furnace, heated to 650°C or higher, and fired for 1 to 3 hours, thereby obtaining a tungsten oxide powder. The heating temperature is preferably 500°C or higher and 2,000°C or lower. When the heating temperature is 500°C or higher and 2,000°C or lower, the temperature is sufficient for growth of tungsten oxide particles, firing cost can be suppressed, and a fired product obtained by firing does not become a hard lump, so that an increase in labor and cost for pulverization can be avoided. Furthermore, the heating temperature is more preferably 700°C or higher and 1,500°C or lower, still more preferably 900°C or higher and 1,500°C or lower. Firing time is preferably 0.5 hours to 72 hours. When firing time is 0.5 hours to 72 hours, the time is sufficient for the growth of the tungsten oxide particles, and unnecessary costs can be suppressed. Furthermore, the firing time is more preferably 0.5 hours to 50 hours, and still more preferably 0.5 hours to 30 hours.

Further, a product obtained by pulverizing the fired product may be used as a tungsten oxide powder. In addition, regardless of whether or not the fired product is pulverized, the undersize product (a fine particle side) obtained by classifying the fired product with a sieve or the like may be used as the tungsten oxide powder. The product on the sieve (a coarse particle side) may be pulverized again, classified, and used. It is also possible to use a vibrating sieve into which iron balls coated with nylon or fluororesin, or the like is put as a grinding medium to perform both grinding and classification. By performing both classification and pulverization as described above, even if the tungsten oxide particles that are too large are present after roasting, they can be removed. Specifically, when the classification is performed using a sieve, it is preferable to use a sieve having a mesh size of 150 µm to 1,000 µm. When the mesh size is 150 µm to 1,000 µm, a ratio of the product on the sieve does not become too large, the re-pulverization is not repeated, and the tungsten oxide powder that needs to be re-pulverized is not classified under the sieve.

In addition, the composite tungstic acid composition of the present invention contains the above-described tungstic acid solution of the present invention and at least one element selected from a group consisting of Si, Al, Ti, Zn, Sn, Y, Ce, Ba, Sr, P, S, La, Gd, Nd, Eu, Dy, Yb, Nb, Li, Na, K, Mg, Ca, Zr, Mo, and Ta.

It is presumed that the composite tungstic acid composition of the present invention is present in a solution as an ion in a state where the tungstic acid and at least one element selected from the group are ionically bonded. Here, the composite tungstic acid composition of the present invention is not limited to the "solution" in the present invention, and includes those in which a precipitate is generated in the "solution". The tungstic acid concentration in the composite tungstic acid composition of the present invention can be calculated by appropriately diluting the composition with dilute hydrochloric acid as necessary, and measuring the W weight fraction in terms of WOs by ICP emission spectrometry (AG-5110 manufactured by Agilent Technologies). Similarly to the W weight fraction, the concentration of at least one element selected from the group in the composite tungstic acid composition of the present invention can also be calculated.

The production method of a composite tungstic acid composition of the present invention includes a step of mixing the tungstic acid solution generated by the production method of a tungstic acid solution of the present invention described above with at least one element selected from a group consisting of Si, Al, Ti, Zn, Sn, Y, Ce, Ba, Sr, P, S, La, Gd, Nd, Eu, Dy, Yb, Nb, Li, Na, K, Mg, Ca, Zr, Mo, and Ta to generate a composite tungstic acid composition.

While stirring a mixture of the tungstic acid solution of the present invention described above and at least one element selected from the group, the liquid temperature is maintained at an appropriate temperature for a predetermined time, whereby the composite tungstic acid composition of the present invention is obtained. Here, the at least one element selected from the group to be mixed with the tungstic acid solution generated by the above-described production method of a tungstic acid solution of the present invention may have various forms such as polyoxometalate, an oxide composed of a peroxo complex, a hydroxide, a metal complex, and a salt.

The tungstic acid film of the present invention contains tungstic acid particles contained in the tungstic acid solution.

The tungstic acid film of the present invention, that is, a tungstic acid formation film contains tungstic acid particles contained in the tungstic acid solution described above.

The production method of a tungstic acid film of the present invention includes a step of applying and firing the tungstic acid solution obtained by the production method of a tungstic acid solution of the present invention described above to generate a tungstic acid film.

Specifically, the tungstic acid solution obtained by the production method of a tungstic acid solution of the present invention described above was dropped onto a substrate using a syringe while being filtered with, for example, a filter having a pore diameter of 2 µm, as necessary, and applied by spin coating (1,500 rpm, 30 seconds). Then, the substrate coated with the tungstic acid solution of the present invention is placed in a stationary furnace, heated to 700°C or higher, and fired for 1 hour, whereby the tungstic acid film of the present invention is obtained.

In addition, the composite tungstic acid film of the present invention contains composite tungstic acid particles contained in the composite tungstic acid composition.

The composite tungstic acid film of the present invention, that is, the composite tungstic acid formation film contains the composite tungstic acid particles contained in the above-described composite tungstic acid solution.

The method for producing a composite tungstic acid film of the present invention includes a step of applying and firing a composite tungstic acid composition obtained by the method for producing a composite tungstic acid composition of the present invention described above to generate a composite tungstic acid film.

Specifically, the composite tungstic acid composition obtained by the above-described method for producing a composite tungstic acid composition of the present invention was dropped onto a substrate using a syringe while being filtered with, for example, a filter having a pore diameter of 2 µm and applied by spin coating (1,500 rpm, 30 seconds) as necessary. Then, the substrate coated with the composite tungstic acid composition of the present invention is placed in a stationary furnace, heated to 700°C or higher, and fired for 1 hour, whereby the composite tungstic acid film of the present invention is obtained.

Incidentally, a dispersant, a pH adjusting agent, a colorant, a thickener, a wetting agent, a binder resin, and the like may be appropriately added to the tungstic acid solution of the present invention according to the use.

### Advantageous Effects of Invention

The tungstic acid solution of the present invention has a high concentration and excellent solution stability.

### Best Mode for Carrying out the Invention

Hereinafter, the tungstic acid solution according to the embodiment of the present invention will be further described with reference to the following examples. However, the following examples do not limit the present invention.

### (Example 1)

100 g of tungsten trioxide was dissolved in 200 g of a 55 mass% sulfuric acid aqueous solution, and ion-exchanged water was added to obtain a tungsten sulfate aqueous solution containing 100 g/L of tungsten in terms of WOs. 200 mL of this tungsten sulfate aqueous solution was added to 1 L of ammonia water (NH₃ concentration: 25 mass%) in a time shorter than 1 minute (NH₃/WO₃ molar ratio = 170.47, NH₃/SO₄²⁻ molar ratio = 13.11) to obtain a reaction liquid (pH 11). This reaction liquid was a slurry of tungstic acid compound hydrate, in other words, a slurry of tungsten-containing precipitate.

Next, this reaction liquid was decanted using a centrifuge, and washed until the conductivity reaches 500 µS/cm or less to obtain a tungsten-containing precipitate from which the sulfur component had been removed. At this time, ammonia water was used as the cleaning liquid.

Furthermore, the tungsten-containing precipitate from which the sulfur component had been removed was diluted with pure water to obtain a tungsten-containing precipitation slurry from which the sulfur component had been removed. WOs was generated by drying a part of the tungsten-containing precipitation slurry from which the sulfur component had been removed at 110°C for 24 hours and then firing it at 1,000°C for 4 hours, and the concentration of WOs contained in the tungsten-containing precipitation slurry from which the sulfur component had been removed was calculated from the weight of WOs.

Then, 2 mass% methylamine and pure water were mixed with the tungsten-containing precipitation slurry from which the sulfur component had been removed and which was diluted with pure water such that the tungsten concentration of the final mixture was 10 mass% in terms of WOs, and the mixture was held for 1 hour while maintaining the liquid temperature at room temperature (25°C) during stirring, thereby obtaining a colorless and transparent tungstic acid aqueous solution according to Example 1. The pH of the obtained tungstic acid aqueous solution according to Example 1 was 8.2.

### (Example 2)

In Example 2, a colorless and transparent tungstic acid aqueous solution according to Example 2 was obtained by performing the same production method as in Example 1 except that 2 mass% methylamine and pure water were mixed such that the tungsten concentration of the final mixture was 0.1 mass% in terms of WO₃. The pH of the obtained tungstic acid aqueous solution according to Example 2 was 8.5.

### (Example 3)

In Example 3, a colorless and transparent tungstic acid aqueous solution according to Example 3 was obtained by performing the same production method as in Example 1 except that 2 mass% methylamine and pure water were mixed such that the tungsten concentration of the final mixture was 30 mass% in terms of WO₃. The pH of the obtained tungstic acid aqueous solution according to Example 3 was 8.3.

### (Example 4)

In Example 4, a colorless and transparent tungstic acid aqueous solution according to Example 5 was obtained by performing the same production method as in Example 1 except that 2 mass% of dimethylamine was mixed, instead of 2 mass% of methylamine, with the tungsten-containing precipitation slurry from which the sulfur component had been removed and which was diluted with pure water. The pH of the obtained tungstic acid aqueous solution according to Example 5 was 7.0.

### (Example 5)

In Example 5, a colorless and transparent tungstic acid aqueous solution according to Example 6 was obtained by performing the same production method as in Example 1 except that 2 mass% tetramethylammonium hydroxide (TMAH) was mixed, instead of 2 mass% methylamine, with the tungsten-containing precipitation slurry from which the sulfur component had been removed and which is diluted with pure water. The pH of the obtained tungstic acid aqueous solution according to Example 6 was 6.9.

### (Example 6)

In Example 6, a colorless and transparent tungstic acid aqueous solution according to Example 6 was obtained by performing the same production method as in Example 1 except that the tungsten concentration of the final mixture was 30 mass% in terms of WOs, and 2 mass% tetramethylammonium hydroxide (TMAH) was mixed, instead of 2 mass% methylamine, with the tungsten-containing precipitation slurry from which the sulfur component had been removed and which is diluted with pure water. The pH of the obtained tungstic acid aqueous solution according to Example 6 was 6.8.

### (Comparative Example 1)

In Comparative Example 1, the slurry of the tungsten-containing precipitate described above was concentrated using an ultrafiltration apparatus until the tungsten concentration of the slurry reached 10 mass% in terms of WOs, and washed until the conductivity reached 500 µS/cm or less, thereby obtaining a translucent sol (a suspension solution). While stirring this mixture, the liquid temperature was maintained at room temperature (25°C) for 1 hour to obtain a tungstic acid aqueous solution of the translucent sol (the suspension solution) according to Comparative Example 1. The pH of the obtained tungstic acid aqueous solution according to Comparative Example 1 was 7.3.

### (Comparative Example 2)

In Comparative Example 2, a tungstic acid aqueous solution of a translucent sol (the suspension solution) according to Comparative Example 2 was obtained by performing the same production method as in Example 1 except that 22 mass% methylamine was mixed, instead of 2 mass% methylamine, with the tungsten-containing precipitation slurry from which the sulfur component had been removed and which was diluted with pure water. The pH of the obtained tungstic acid aqueous solution according to Comparative Example 2 was 6.7.

Then, the following physical properties were measured for the tungstic acid aqueous solutions obtained in Examples 1 to 6 and Comparative Examples 1 and 2. Hereinafter, values of the measured physical properties and the method for measuring the values of the physical properties are shown, and the measurement results are shown in Table 1.

### <Element analysis>

The sample was appropriately diluted with dilute hydrochloric acid as necessary, and the W weight fraction in terms of WOs was measured by ICP emission spectrometry (AG-5110 manufactured by Agilent Technologies).

### <Dynamic light scattering method>

The particle size distribution was evaluated by the dynamic light scattering method in accordance with JIS Z 8828:2019 using a zeta potential/particle size/molecular weight measurement system (ELSZ-2000ZS manufactured by Otsuka Electronics Co., Ltd.). The filtration was performed with a filter having a pore size of 2 µm, and the dispersion treatment described above using ultrasonic waves was performed. The particle size (D50) refers to a median diameter (D50) that is a particle size indicating a 50% integrated value of an integrated distribution curve. The "initial particle size D50 (nm)" in Table 1 refers to a tungstic acid particle size (D50) in a tungsten aqueous solution whose liquid temperature was adjusted to 25°C immediately after generation. A "temporal particle size D50 (nm)" in Table 1 refers to the tungstic acid particle size (D50) in the tungsten aqueous solution after being left to stand for 1 month in an incubator set at a room temperature of 25°C.

### <Ammonia quantitative analysis>

25 ml of a sodium hydroxide solution (30 g/100 ml) was added to 1 to 5 ml of the sample solution, the mixed solution was boiled and distilled, and the distilled liquid (about 200 ml) was flowed out into a container containing 20 ml of pure water and 0.5 ml of sulfuric acid to separate ammonia. Next, the separated ammonia was transferred to a 250 ml measuring flask, and the volume was adjusted to 250 ml with pure water. Furthermore, 10 ml of the solution whose volume was adjusted to 250 ml was collected in a 100 ml measuring flask, 1 ml of a sodium hydroxide solution (30 g/100 mL) was added to the collected solution, and the volume was adjusted to 100 ml with pure water. The solution thus obtained was quantitatively analyzed using an ion meter (body: HORITA F-53, electrode: HORIBA 500 2A) to measure the concentration (mass%) of ammonium ions contained in the solution.

### <Measurement of pH>

The sample at 25°C was measured using a tabletop pH meter (F-71S: standard ToupH electrode, manufactured by HORIBA, Ltd.).

### <Temporal stability test>

The tungstic acid aqueous solutions of Example 1 to 6 and Comparative Examples 1 and 2 were allowed to stand for 1 month in an incubator set at a room temperature of 25°C, and then the presence or absence of a significant increase in particle size was visually observed. Those in which a significant increase in particle size was not observed, specifically, those in which an initial particle size was 200 nm or less and an increase in particle size after 1 month was 20% or less were evaluated as "o (GOOD)" which means having temporal stability, and those in which a significant increase in particle size or a precipitate was observed, specifically, those in which the initial particle size was more than 200 nm or the increase in particle size after 1 month was more than 20% were evaluated as "× (BAD)" which means not having temporal stability. In addition, the temporal particle size (D50) of the tungstic acid particles in the tungstic acid aqueous solutions of Examples 1 to 6 and Comparative Examples 1 and 2 after standing for 1 month was measured using the dynamic light scattering method described above.

### <Film formability test>

An appearance evaluation of a coating film formed on the surface of a glass substrate as a substitute for a current collecting plate was performed by observing the coating film with an optical microscope. The tungstic acid aqueous solutions of Examples 1 to 6 and Comparative Examples 1 and 2 were dropped onto a 15 mm × 15 mm glass substrate using a syringe, and applied by spin coating (1,500 rpm, 30 seconds). Then, the applied portion was air-dried with high-pressure air to form a coating film on the glass substrate. The formed coating film was observed with an optical microscope at 100 magnification, and when no bubbles, coating unevenness or cracks were observed, the film was evaluated as "o (GOOD)" which means having excellent film formability, and when even one bubble, coating unevenness or crack was observed, the film was evaluated as "× (BAD)" which means having no excellent film formability.

,

**[Table 1]**

| | Identification of substances | | | | | | | Evaluation | | |
|---|---|---|---|---|---|---|---|---|---|---|
| | State | WO₃ (ma ss%) | Amin e (mass %) | Amine /W molar ratio | Organic nitrogen compound | pH | Initial particle size D50 (nm) | Tempo ral particl e size D50 (nm) | Tempor al stability | Film formabi lity |
| Example 1 | Mixed soluti on | 10.0 | 2 | 1.49 | Methylamine | 8.2 | < 1 nm | < 1 nm | o (GOOD) | o (GOOD) |
| Example 2 | Mixed soluti on | 0.1 | 2 | 1.49 | Methylamine | 8.5 | < 1 nm | < 1 nm | o (GOOD) | o (GOOD) |
| Example 3 | Mixed soluti on | 30.0 | 2 | 0.50 | Methylamine | 8.3 | < 1 nm | < 1 nm | o (GOOD) | o (GOOD) |
| Example 4 | Mixed soluti on | 10.0 | 2 | 1.03 | Dimethylamine | 7.0 | < 1 nm | < 1 nm | o (GOOD) | o (GOOD) |
| Example 5 | Mixed soluti on | 10.0 | 2 | 0.51 | Tetramethylam monium hydroxide (TMAH) | 6.9 | < 1 nm | < 1 nm | o (GOOD) | o (GOOD) |
| Example 6 | Mixed soluti on | 30.0 | 2 | 0.17 | Tetramethylam monium hydroxide (TMAH) | 6.8 | < 1 nm | < 1 nm | o (GOOD) | o (GOOD) |
| Compara tive Example 1 | Sol | 10.0 | 0 | 0.00 | None | 7.3 | 111 nm | 1287 nm | × (BAD) | × (BAD) |
| Compara tive Example 2 | Sol | 10.0 | 22 | 16.40 | Methylamine | 6.7 | 1332 nm | 12360 nm | × (BAD) | × (BAD) |

As shown in Table 1, the tungstic acid aqueous solutions according to Examples 1 to 6 were excellent in solution stability during long-term storage when the tungstic acid concentration in the aqueous solution was 0.1 to 40 mass%. On the other hand, in the tungstic acid aqueous solution according to Comparative Example 1, it was observed that a precipitate was precipitated after the tungstic acid aqueous solution was allowed to stand for 1 month under the test conditions of the temporal stability test described above. In the tungstic acid aqueous solution according to Comparative Example 2, a precipitate was observed.

In the tungstic acid aqueous solutions according to Examples 1 to 6, when the tungstic acid particle size (D50) measured by the dynamic light scattering method in the aqueous solution was 20 nm or less, satisfactory results were obtained as to the results of the temporal stability test. Specifically, in the tungstic acid aqueous solutions according to Examples 1 to 6, the temporal particle size (D50) of the tungstic acid hardly increased from the initial particle size (D50) even after 1 month had elapsed, and the tungstic acid aqueous solution was excellent in temporal stability. On the other hand, in the tungstic acid aqueous solution of the translucent sol (the suspension solution) according to Comparative Example 1, the initial particle size (D50) of the tungstic acid increased about 10 times in terms of the temporal particle size (D50), and a precipitate was further observed. In the tungstic acid aqueous solution according to Comparative Example 2, a precipitate was observed.

In the tungstic acid aqueous solutions according to Examples 1 to 6, when the pH of the aqueous solution was 6 or more and 13 or less, the solution stability was further improved. Since the tungstic acid aqueous solutions according to Examples 1 to 6 have increased basicity in an order of methylamine, dimethylamine, and tetramethylammonium hydroxide (TMAH) contained in the aqueous solutions, it was presumed that as the basicity increases, the methylamine, dimethylamine, and tetramethylammonium hydroxide (TMAH) tend to strongly bind to the polytungstic acid polynuclear complex ion, so that H+ in the polytungstic acid polynuclear complex ion is liberated, leading to a decrease in pH.

In the tungstic acid aqueous solutions according to Examples 1 to 6, as a result of observing the coating film formed from these tungstic acid aqueous solutions at 100 magnification with an optical microscope, in the tungstic acid films formed from the tungstic acid aqueous solutions according to all the examples, no bubbles, coating unevenness, and cracks were observed, and the film formability was excellent.

The invention disclosed in the present description includes, in addition to the configurations of the respective inventions and the embodiments, those specified by changing these partial configurations to other configurations disclosed in the present description, those specified by adding other configurations disclosed in the present description to these configurations, or those specified by deleting these partial configurations to an extent that a partial action and effect can be obtained and forming a superordinate concept.

### Industrial Applicability

The tungstic acid aqueous solution according to the present invention has a high concentration and excellent solution stability, and is suitable as a coating agent or a composite material with a plurality of elements. In the tungstic acid aqueous solution according to the present invention, a tungstic acid composite material or the like has been conventionally produced by firing at a high temperature, whereas it can be produced at a low temperature (low energy) by mixing an aqueous solution and is stable as a product, leading to achievement of sustainable management of natural resources, efficient use, and decarbonization (carbon neutral).

## Claims

1. A tungstic acid solution containing 0.1 to 40 mass% of tungsten in terms of WOs, wherein
the tungstic acid solution has a particle size (D50) of 20 nm or less as measured by particle size distribution measurement using a dynamic light scattering method.

2. The tungstic acid solution according to claim 1, wherein the tungstic acid solution is an aqueous solution.

3. The tungstic acid solution according to claim 1 or 2, wherein the tungstic acid solution contains ammonia and an organic nitrogen compound.

4. The tungstic acid solution according to claim 3, wherein the organic nitrogen compound is an aliphatic amine and/or a quaternary ammonium.

5. The tungstic acid solution according to claim 4, wherein the aliphatic amine is methylamine or dimethylamine, and the quaternary ammonium is tetramethylammonium hydroxide (TMAH).

6. The tungstic acid solution according to claim 1 or 2, wherein in the particle size distribution measurement, the particle size (D50) is 10 nm or less.

7. The tungstic acid solution according to claim 1 or 2, wherein in the particle size distribution measurement, the particle size (D50) is 2 nm or less.

8. The tungstic acid solution according to claim 1 or 2, wherein in the particle size distribution measurement, the particle size (D50) is 1 nm or less.

9. The tungstic acid solution according to claim 1 or 2, wherein the tungstic acid solution has a pH of 6 or more and 13 or less.

10. A tungsten oxide powder comprising tungstic acid particles contained in the tungstic acid solution according to claim 1 or 2.

11. A production method of a tungstic acid solution, comprising:
a step of adding an acidic tungsten aqueous solution containing tungsten in an amount of 1 to 100 g/L in terms of WOs to a 10 to 30 mass% ammonia aqueous solution to generate a tungsten-containing precipitate; and
a step of adding an organic nitrogen compound to a tungsten-containing precipitate slurry obtained by making the tungsten-containing precipitate into a slurry to generate a tungstic acid solution.

12. The production method of a tungstic acid solution according to claim 11, wherein the organic nitrogen compound is an aliphatic amine and/or a quaternary ammonium.

13. A production method of a tungsten oxide powder, comprising a step of drying and firing the tungstic acid solution obtained by the production method according to claim 11 or 12 to generate a tungsten oxide powder.

14. A composite tungstic acid composition comprising: the tungstic acid solution according to claim 1 or 2; and at least one element selected from the group consisting of Si, Al, Ti, Zn, Sn, Y, Ce, Ba, Sr, P, S, La, Gd, Nd, Eu, Dy, Yb, Nb, Li, Na, K, Mg, Ca, Zr, Mo, and Ta.

15. A production method of a composite tungstic acid composition, comprising a step of mixing the tungstic acid solution generated by the production method of a tungstic acid solution according to claim 11 or 12 with at least one element selected from the group consisting of Si, Al, Ti, Zn, Sn, Y, Ce, Ba, Sr, P, S, La, Gd, Nd, Eu, Dy, Yb, Nb, Li, Na, K, Mg, Ca, Zr, Mo, and Ta to generate a composite composition.

16. A tungstic acid film comprising tungstic acid particles contained in the tungstic acid solution according to claim 1 or 2.

17. A production method of a tungstic acid film, comprising applying and firing the tungstic acid solution according to claim 1 or 2.

18. A composite tungstic acid film comprising composite tungstic acid particles contained in the composite tungstic acid composition according to claim 14.

19. A production method of a composite tungstic acid film, comprising applying and firing the composite tungstic acid composition according to claim 14.
